# EUROPEAN PATENT APPLICATION

(11) **EP 4 847 573 A1**
(43) Date of publication of application: **02.12.2026**
(21) Application number: 25199166.7
(22) Date of filing: 29.08.2025
(51) Int. Cl.: C09D 15/00

(54) **FINISHING COMPOSITION, PROCESS, KIT, AND ARTICLE FOR SUBSTRATE**

(30) Priority: 26.05.2025 CA 3274839; 29.05.2025 US 202519222711
(71) Applicant: RPM Industrial Coatings Group, Inc., Greensboro NC 27409 (US)
(72) Inventor: MCFALLS, Marvin Rodney, Morganton, 28655 (US); SHORE, Gary Edwin, Blowing Rock, 28605 (US); HILTZ, III, Douglas Kenneth, High Point, 27262 (US); MUELLER, Douglas Todd, High Point, 27265 (US)
(74) Representative: Forresters IP LLP

(57) **Abstract**

A finishing composition for a substrate is provided. The finishing composition includes a base carrier composition and a cerusing element comprising an active agent swellable polymer powder. Additionally provided is a finishing process including steps (A) and (B), where step (A) includes applying a finishing composition including a base carrier composition and a cerusing element comprising an active agent swellable polymer powder and step (B) includes applying an active agent to a substrate. Further provided is a kit for finishing a substrate including a base carrier composition and a cerusing element comprising an active agent swellable polymer powder. Even further provided is an article having a finishing composition disposed thereon.

## Description

### TECHNICAL FIELD

The concepts presented herein relate to finishing compositions, finishing processes, kits for finishing substrates, and articles finished with finishing compositions. More specifically, the technologies described herein relate to finishing compositions for substrates that are usable to ceruse the substrate.

### BACKGROUND

Ceruse was originally a white lead-based pigment used in cosmetics and skin whiteners. The use of ceruse in cosmetics and skin whiteners was banned due to its toxicity and ability to cause lead poisoning. Craftsmen then later repurposed ceruse for use in wood to deter wood-boring insects and prevent wood rot for exterior wood works. This technique was later made popular as a "modern" wood finishing technique during the Art Deco era of the early 1900s.

Cerusing is also referred to in woodworking as liming or limewashing. Various methods and products have been used to create the "cerused" look over the years. Originally, this look was achieved by filling wood grain with a colored filler, putty, Plaster of Paris, paint, or similar medium. After the filler dried, the excess was sanded off of the surface of the wood, leaving the cerusing material only in the wood grain. Contrasting color was then added to the surface of the wood flake using hand applied methods like French polishing.

### SUMMARY

The following is a brief summary of the subject matter that is described in greater detail herein. This summary is not intended to be limiting as to the scope of the claims.

Described herein is a finishing composition that includes a base carrier composition and a cerusing element which includes an active agent swellable polymer powder.

Also described herein is a finishing process that includes steps (A) and (B) applied in sequential order. Step (A) includes applying a finishing composition to a substate. The finishing composition includes a base carrier composition and a cerusing element, which includes an active agent swellable polymer powder. Step (B) includes applying an active agent to the substrate.

Additionally described herein is a kit for finishing a substrate. The kit includes a base carrier composition and a cerusing element which includes an active agent swellable polymer powder.

Further described herein is an article which includes a substrate, where a finishing composition has been disposed on the substrate. The finishing composition includes a base carrier composition and a cerusing element, which includes an active agent swellable polymer powder.

The above summary presents a simplified summary in order to provide a basic understanding of some aspects of the compositions, applications thereof, and processes discussed herein. This summary is not an extensive overview of the compositions, applications thereof, and processes discussed herein. It is not intended to delineate the scope of such compositions, applications thereof, and processes. Its sole purpose is to present some concepts in a simplified form as a prelude to the more detailed description that is presented later.

### DETAILED DESCRIPTION

In the following description, for purposes of explanation, numerous specific details are set forth to provide a thorough understanding of one or more aspects. It may be evident, however, that such aspect(s) may be practiced without these specific details.

Described herein are various technologies pertaining to finishing compositions, processes of finishing substrates, kits directed to finishing compositions, and finished articles.

Through the development of cerusing, the process has been refined and simplified by methods of spraying the background color first, then applying the ceruse on top. Still, the process to achieve contrasting colors to the background and grain consists of at least two separate color applications, and the steps required in the finishing process usually require several clear coats to achieve the best "cerused" look result. An example current conventional process may be: (1) apply background stain color to raw wood (spray only or spray and wipe); (2) apply first coat of sealer (to lock down the background stain); (3) sand sealer to create a smooth surface and level raised grain; (4) apply second coat of sealer to create smooth foundation for the ceruse application; (5) apply ceruse (spray, dry, and then wipe clean, or sand, or remove with abrasive wool); and (6) apply topcoat (to lock down the ceruse).

In other words, current methods of cerusing involve a multitude of steps, the need to lock down the different layers through application of clear coats/top coats, and the inability to apply ceruse and a carrier composition concurrently. The present disclosure remedies these problems by providing a finishing composition, processes for finishing substrates that does not involve an overabundance of application steps, and the ability to apply ceruse and a carrier composition containing the ceruse concurrently.

As discussed above, the finishing composition disclosed herein comprises a base carrier composition and a cerusing element. The base carrier composition can be any suitable liquid or gel that is viscous such that it may be applied to a substrate, but does not independently cause swelling of the cerusing element. The base carrier composition can be aqueous or nonaqueous. The base carrier composition is capable of adequately dispersing the cerusing element within the base carrier composition such that when applied to a substrate, the base carrier composition including the dispersed cerusing element allows for a desired, e.g., uniform, distribution of cerusing element on the surface of the substrate. The base carrier composition may additionally aid the distribution of the cerusing element into the pores or textured surface of the substrate. The base carrier composition described herein can be colored, substantially colorless, or colorless. The base carrier composition may range from being tinted to colorless. When tinted, the base carrier composition can vary from being colored to substantially colorless. When non-tinted, the base carrier composition may be colorless. The base carrier composition's colored, substantially colorless, or colorless feature can be determined via measuring the opacity by the contrast ratio opacity formula, where opacity percentage is equal to Y(black) divided by Y(white) multiplied by 100%. An opacity percentage between the range of 95.00 to 100.00% is colored. An opacity percentage between the range of 5.00 to 94.99% is substantially colorless. An opacity percentage between the range of 0.00 to 4.99% is colorless. As used herein, "color" can be determined based on the CIELAB standards (*e*.*g*., color range for CIELAB at D65/10 colorimetry ranges from L* 0 to 100.0, a* -0.00 to 0.00, b* -0.00 to 0.00, C* 0.00 and h* 207.91 to 0.00). When the base carrier composition is not colorless, the base carrier composition may be colored by any one of pigments and dyes, or a combination thereof. It is to be generally understood that the pigments and dyes, or combinations thereof, can be the same or different from the active agent swellable polymer powder. The base carrier composition, in certain aspects, may further contain metallic flake and/or pearlescent powder. Examples of suitable liquids and/or gels that can be used as the base carrier composition include, but are not limited to, water, oil including, but not limited to vegetable oil and synthetic resins, enamels, top coats, clear coats, and stain compositions. Examples of suitable stain compositions include oil-based stain compositions, water-based stain compositions, or solvent-based stain compositions. Further examples of suitable stain compositions include hybrid stain compositions comprising a mixture of any one of oil-based stain compositions, water-based stain compositions, or solvent-based stain compositions.

The base carrier composition is suitable for application to multiple different substrates. The substrates may be porous and/or textured. In some aspects, the substrate may be embodied as any of the following, but is not limited thereto, wood, stone, concrete, plastic, resin, vinyl, composite materials, metal, and prefinished surfaces. The base carrier composition can be applied to the substrate by a variety of techniques, including, but not limited to, sponging, brushing, dipping, flow coating, rolling, spraying, and the like. Suitable woods include, by way of nonlimiting example, oak, ash, chestnut, hickory, cherry, mahogany, and pine. Suitable composite materials include, by way of nonlimiting example, manufactured woods such as wood-plastic composites (WPCs); engineered woods; stones; ceramics; plastics such as styrene, HDPE, polypropylene; and minerals. Suitable prefinished surfaces include, by way of nonlimiting example, various metallic surfaces such as iron, aluminum, magnesium, brass, copper, and other fabricated decorative surfaces; cements; stones; ceramics; and the like.

For ease of reference herein, regardless of the substrate selected, the surface of the substrate will be referred to as the "flake" of the substrate, whereas the porous/textured portions will be referred to as the "grain" of the substrate. When selecting a base carrier composition, the size of the substrate's pores in the flake should be considered in relation to the base carrier composition's particle size. By way of nonlimiting example, the base carrier composition's particle size should be less than or equal to the size of the substrate's pores in the flake. This enables the base carrier composition to enter the substrate's pores, whereas if the base carrier composition's particle size is larger than the substrate's pores, the base carrier composition may not penetrate the surface of the substrate appropriately. Thus, the desired effect of the base carrier composition may not be achieved.

The cerusing element comprises an active agent swellable polymer powder. The active agent swellable polymer powder is designed to swell upon interaction with an active agent. The active agent swellable polymer powder may partially or completely swell based on the level of saturation of active agent as discussed herein. In certain aspects, due to the swelling, the active agent swellable polymer powder particles may become fused or continuous beads. In certain aspects, the active agent swellable polymer powder may have a 60 degree gloss in the range of 0% to 100%. The active agent swellable polymer powder may have a pre-swelling D90 particle size in the range of approximately 5 microns to 200 microns. By way of nonlimiting example, the active agent swellable polymer powder may have a particle diameter size of approximately 5 microns, 10 microns, 15 microns, 20 microns, 25 microns, 30 microns, 35 microns, 40 microns, 45 microns, 50 microns, 55 microns, 60 microns, 65 microns, 70 microns, 75 microns, 80 microns, 85 microns, 90 microns, 95 microns, 100 microns, 105 microns, 110 microns, 115 microns, 120 microns, 125 microns, 130 microns, 135 microns, 140 microns, 145 microns, 150 microns, 155 microns, 160 microns, 165 microns, 170 microns, 175 microns, 180 microns, 185 microns, 190 microns, 195 microns, or 200 microns. In certain aspects, the active agent swellable polymer powder may have a pre-swelling D90 maximum particle diameter size of approximately 200 microns. In certain aspects, the active agent swellable polymer powder's diameter may swell to approximately 100% to 400% of its original particle size (pre-swelling particle size). By way of nonlimiting example, the active agent swellable polymer powder's diameter may swell to approximately 100%, 125% 150%, 175%, 200%, 225%, 250%, 275%, 300%, 325%, 350%, 375%, or 400% of its original particle size. For the avoidance of doubt, swelling to 100% of its original particle diameter size means that the swollen particle is two (2) times the original non-swollen particle diameter size.

In certain aspects, the cerusing element including the active agent swellable polymer powder can be dispersed within the base carrier composition. In other aspects, the cerusing element including the active agent swellable polymer powder can remain entirely separate or independent of the base carrier composition and then mixed shortly before application to the substrate. As discussed herein, prior cerusing applications involved the use of colored filler, putty, Plaster of Paris, paint, or similar mediums. These cerusing applications were limited in capabilities, for example, application of these cerusing mediums required a multitude of application steps including, applying the cerusing medium, drying the cerusing medium, removing the excess cerusing medium, and sanding to create a uniform substrate surface. The active agent swellable polymer powder disclosed herein eliminates the need for multiple application steps. When applied to a substrate, the active agent swellable polymer powder may become embedded in the substrate's pores or caught on the textured surface of the substrate. Once the active agent swellable polymer powder is applied to the substrate and after application of the active agent, the active agent causes the active agent swellable polymer powder to swell. This swelling enhances the visual aspects of the active agent swellable polymer powder, and therefore, in turn, enhances the visual aspects of the substrate. The active agent swellable polymer powder may be a number of a variety of colors. The active agent swellable polymer powder may be colored or substantially colored by natural or artificial means. When artificially colored, the active agent swellable polymer powder may be colored by any one of pigments, dyes, or combinations thereof. The active agent swellable polymer powder's color may be selected based on the desired visual aspect to be achieved. By way of nonlimiting example, the active agent swellable polymer powder may swell within the grain of the substrate, thereby causing the grain to appear as one distinct color, while the flake of the substrate appears as another distinct color. It may be desired that the active agent swellable polymer powder's color is chosen to be complementary or in contrast to the substrate color and/or the base carrier composition's color. The active agent swellable polymer powder is contemplated to be opaque or translucent. In certain aspects, a translucent active agent swellable polymer powder is used to achieve a "softened" look for the grain of the substrate, whereas in certain aspects, an opaque active agent swellable polymer powder is used to enhance the look of the grain of the substrate.

The active agent swellable polymer powder described herein may be an organic polymer powder. Suitable organic polymer powders may be, but are not limited to, the following examples: polyester polymer powder, polyurethane polymer powder, polyester-epoxy polymer powder, polyester-acrylic polymer powder, epoxy polymer powder, glycidyl-functional acrylic polymer powder, acrylic polymer powder, and polypropylene polymer powder.

When selecting an active agent swellable polymer powder, the particle size of the active agent swellable polymer powder should be considered in relation to the substrate's grain. In some aspects, the active agent swellable polymer powder may be chosen in relationship to the diameter of the pores of the substrate's grain. It is intended that the cerusing element including the active agent swellable polymer powder will swell within the pores of the grain or on the texture of the grain of the substrate when the active agent is applied to the substrate. Accordingly, the cerusing element containing the active agent swellable polymer powder should be chosen such that this swelling may occur. If the cerusing element containing the active agent swellable polymer powder is not capable of swelling in the substrate's pores or on the texture of the grain, the desired effect of the active agent swellable polymer powder may not be achieved.

By way of nonlimiting example, the active agent swellable polymer powder's particle size should be less than or equal to the size of the pores of the substrate's grain. This would enable the active agent swellable polymer powder to enter the substrate's pores, whereas if the active agent swellable polymer powder's particle size is larger than the substrate's pores, the active agent swellable polymer powder may not be able to penetrate the substrate's pores appropriately. Thus, the desired effect of the active agent swellable polymer powder may not be achieved. This is not to say, however, that multiple active agent swellable polymer powders may be chosen. By way of nonlimiting example, it could be advantageous to select one active agent swellable polymer powder that has a particle size that is less than or equal to the size of the substate's pores of the grain, and a second active agent swellable polymer powder that has a particle size that is larger than the size of the substrate's pores. This could be particularly advantageous when it is desired that one active agent swellable polymer powder is "attracted" to the pores of the substrate, while another active agent swellable polymer powder is "attracted" to the textured areas of the flake, thus creating a visually distinct representation between the pores and the textured areas.

In some aspects of the present disclosure, it is contemplated that the volume ratio of base carrier composition to cerusing element in the finishing composition ranges from 10:90 to 90:10. For example, 10:90, 15:85, 20:80, 25:75, 30:70, 35:65, 40:60, 45:55, 50:50, 55:45, 60:40, 65:35, 70:30, 75:25, 80:20, 85:15, or 90:10. In certain aspects, the cerusing element may constitute anywhere from 5 wt.% to 95 wt.% of the total weight of the finishing composition. For example, the cerusing element may constitute 5 wt.%, 10 wt.%, 15 wt.%, 20 wt.%, 25 wt.%, 30 wt.%, 35 wt.%, 40 wt.%, 45 wt.%, 50 wt.%, 55 wt.%, 60 wt.%, 65 wt.%, 70 wt.%, 75 wt.%, 80 wt.%, 85 wt.%, 90 wt.%, or 95 wt.% of the total weight of the finishing composition.

According to the present disclosure, upon application of an active agent, the active agent swellable polymer powder is designed to swell. Accordingly, a sufficient amount of active agent must be applied to a substrate to enable swelling of the active agent polymer powder to achieve the desired cerusing effect. In some aspects, it may be desired to entirely saturate the active agent swellable polymer powder, while in certain other aspects, it may be desired to partially saturate the active agent swellable polymer powder. In further aspects, sometimes, the desired effect may be achieved without swelling or adding any active agent. The saturation level should be chosen in relation to the desired finished look achieved by application of the finishing composition and active agent.

In some aspects, the active agent may be a solvent. The solvent may be any of oxygenated organic solvents, cyclic organic solvents, cyclic organosilicone solvents, and halogenated solvents. As discussed herein, the base carrier composition may be a solvent-based stain composition. When the base carrier composition is a solvent-based stain composition, the active agent and the solvent in the solvent-based stain composition must be different solvents, such that the active agent swellable polymer powder does not interact with the solvent, i.e., swell, in the solvent-based stain composition, but only with the active agent. In other aspects, the active agent can be a compound having at least one functional group selected from the group consisting of ketones, esters, alcohols, ethers, alkyl halides, and siloxanes. The active agent may include, but is not limited to, acetone, butanol, butyl cellosolve (2-butoxyethanol), ethanol, ethyl acetate, methyl n-amyl ketone (2-heptanone), butanone, methanol, methyl acetate, n-butyl acetate, propylene glycol methyl ether acetate, toluene, perchloroethylene, tricholortrifluoroethane, 1,1,1-trichloroethane, parachlorobenzotrifluoride, cyclohexasiloxane, and cyclopentasiloxane. The active agent itself may be naturally colorless, substantially colorless, or colored. The active agent may range from being tinted to colorless. When tinted, the active agent can vary from being colored to substantially colorless. When non-tinted, the active agent may be colorless. The active agent's colored, substantially colorless, or colorless feature can be determined via measuring the opacity by the contrast ratio opacity formula as defined hereinabove. As used herein, "color" can be determined based on the CIELAB standards (*e.g.,* color range for CIELAB at D65/10 colorimetry ranges from L* 0 to 100.0, a* -0.00 to 0.00, b* -0.00 to 0.00, C* 0.00 and h* 207.91 to 0.00). The active agent itself may be artificially colored. When the active agent is artificially colored, it may be artificially colored with any of pigments, dyes, or combinations thereof. It is to be generally understood that the pigments and dyes, or combinations thereof, can be the same or different from the active agent swellable polymer powder. The active agent may be part of a topcoat, sealer coat, tie coat, wash coat, clear coat, or activator. When the active agent is included in those applications, the application can be colorless, substantially colorless, or colored. The active agent may be tinted or colorless as defined hereinabove. As with the base carrier composition, when the application is colored, it may be colored with any of pigments, dyes, or combinations thereof. Again, it is to be generally understood that the pigments and dyes, or combinations thereof, can be the same or different from the active agent swellable polymer powder. In some circumstances, it may be desirable to select multiple active agents for application. This may particularly be the case where multiple different active agent swellable polymer powders are included in the finishing composition. Because the active agent must be selected in relationship with the active agent swellable polymer powder, there may be times where one active agent swellable polymer powder included in the finishing composition requires one active agent to enable swelling, when a second active agent swellable polymer powder included in the finishing composition requires a different active agent to enable swelling. In certain aspects, when more than one active agent swellable polymer powder is included in the finishing composition, it is possible that one or more of the included active agent swellable polymer powders swell upon interaction with the same active agent.

### Application Process

According to the present disclosure, a finishing process including steps (A) and (B) is also described. Steps (A) and (B) are applied in sequential order. Step (A) includes applying a finishing composition to a substrate. The finishing composition comprises a base carrier composition and a cerusing element including an active agent swellable polymer powder. Step (B) comprises applying an active agent to the substrate.

When the finishing composition of Step (A) is applied to the substrate, the base carrier composition, depending on the texture of the substrate, may penetrate the substrate's flake, the substrate's grain, or both. When the finishing composition of Step (A) is applied, the cerusing element including the active agent swellable polymer powder, in some capacity, enters the grain of the substrate and/or catches to the textured portion of the substrate. As used herein, "catches" indicates that the active agent swellable polymer powder in some way interacts with the textured portion of the substrate. This interaction may include affixation or embedment, or merely touching the textured portion of the substrate, such that the active agent polymer powder does not become easily detached from the textured portion of the substrate.

After application of Step (A), Step (B) is performed. Step (B) includes applying an active agent to the surface of the substrate. The active agent of Step (B) interacts with the active agent swellable polymer powder of Step (A) that has either entered the grain of the substrate or become caught on the textured portion of the substrate. This interaction causes the active agent swellable polymer powder to swell when in contact with the active agent of Step (B). Accordingly, this causes the active agent swellable polymer powder to expand, thereby potentially filling the grain of the substrate, or enlarging itself relative to the size of the textured portion of the substrate. By "fills" the active agent swellable polymer powder may swell to partially fill or completely fill the grain of the substrate. In certain aspects, the finishing process of the present disclosure may be devoid of any further steps, e.g., no further steps in a finishing process beyond steps (A) and (B).

In certain aspects, the finishing process may additionally include Step (C). Step (C) includes at least one of: (1) wiping the finishing composition of Step (A) from the substrate prior to conducting Step (B); and (2) allowing the finishing composition of Step (A) to dry prior to conducting Step (B). In certain aspects of the present disclosure, however, the active agent of Step (B) may be applied immediately after application of the finishing composition of Step (A). Step (C), Option (1) enables the excess finishing composition to be removed from the substrate. This may enable a smoother application of the active agent of Step (B). This may also enable the active agent of Step (B) less inhibition for interacting with the active agent swellable polymer powder of Step (A). Suitable base carrier compositions, cerusing elements comprising active agent swellable polymer powders, active agents, and substrates are described herein. In certain aspects, the finishing process of the present disclosure may be devoid of any further steps beyond step (C), e.g., no further steps in a finishing process comprising steps (A), (B), and (C).

As discussed herein, the cerusing element including the active agent swellable polymer powder may be dispersed within the base carrier composition.

### Kits

Additionally disclosed is a kit for finishing a substrate. The kit can include a base carrier composition as disclosed herein and a cerusing element including an active agent swellable polymer powder as disclosed herein. In certain aspects, the active agent swellable polymer powder is dispersed within the base carrier composition. In certain other aspects, the cerusing element including the active agent swellable polymer powder is separate from the base carrier composition, with the intention that it is later combined with the base carrier composition prior to application onto a substrate. The kit may additionally include an active agent. In certain aspects, the kit may not include an active agent because sometimes, the desired effect may be achieved without swelling or adding any active agent. Suitable base carrier compositions, cerusing elements, active agent swellable polymer powders, active agents, and substrates have been disclosed herein.

### Articles

Additionally disclosed is an article including a substrate and a finishing composition disposed on the substrate, where the finishing composition includes a base carrier composition and a cerusing element including an active agent swellable polymer powder as disclosed herein. In certain aspects, the active agent swellable polymer powder is dispersed within the base carrier composition prior to application to the substrate. In certain other aspects, the cerusing element including the active agent swellable polymer powder is separate from the base carrier composition but is later combined with the base carrier composition prior to the ultimate application of the finishing composition to the substrate. In certain aspects, an active agent is disposed on the substrate subsequent to the finishing composition. In further aspects, sometimes, the desired effect may be achieved without swelling or adding any active agent. Suitable base carrier compositions, cerusing elements, active agent swellable polymer powders, active agents, and substrates have been disclosed herein.

### Methods of Making

Additionally described is a method of making a finishing composition. This finishing composition is intended to be applied to a substrate as disclosed herein. This method includes selecting a base carrier composition and a cerusing element comprising an active agent swellable polymer powder. In some aspects, the cerusing element comprising the active agent polymer powder is dispersed within the base carrier composition. Suitable base carrier compositions, cerusing elements, active agent swellable polymer powders, and substrates have been disclosed herein.

The following are non-limiting examples that further illustrate various aspects of the disclosed invention.

### EXAMPLES

For Examples 1 through 3, a red oak veneer substrate was used in each of the Examples. The base carrier composition selected for each of the following Examples was a conventional oil-based stain composition. The following TCI Powder Coatings brand (available from Ellaville, Georgia) and Micro Powders, Inc. brand (available from Tarrytown, New York) powders were used as active agent swellable polymer powders in the Examples: (Example 1) Amazon Gray 7035 (9930-74267) polyester powder coat; (Example 2) Furniture White (5510-9074) polyurethane powder coat; (Example 3) Artic White (6920-9031) poly-epoxy hybrid powder coat. The following active agents were used in each of the following Examples: acetone, ethyl acetate, methyl ethyl ketone (MEK), methyl n-amyl ketone (MAK), n. butyl acetate, and butyl cellosolve.

For each of the Examples, five separate finishing compositions were prepared utilizing varying loads of cerusing element to base carrier composition. The active agent swellable polymer powder was added by volume to the base carrier composition in varying loads from 5%, 20%, 40%. 80%, and 100%. At 100% load, equal volumes of base carrier composition and active agent swellable polymer powder were used (*e.g.,* 50:50 volume ratio of base carrier composition and active agent swellable polymer powder)).

The finishing composition was applied to the substrate, wiped free of excess, allowed to dry, and then the active agent was applied. The results are demonstrated in charts below. The results are analyzed in the following manner "S" refers to a "slight effect" and "D" refers to a "dramatic effect." The "+" symbols indicate areas where a slightly greater effect was observed, while the "-" symbols indicate that a slightly less effect was observed. Areas marked "NR" in the chart(s) indicate that results were not reviewed.

### EXAMPLE 1: Polyester Active Agent Swellable Polymer Powder and Conventional Oil-Based Stain Composition

| % load | acetone | ethyl acetate | MEK | MAK | n. butyl acetate | butyl cellosolve |
|---|---|---|---|---|---|---|
| 5% | S | NR | S | S | NR | NR |
| 20% | NR | NR | NR | NR | NR | NR |
| 40% | S | D | D | D | D | S+ |
| 80% | NR | NR | NR | NR | NR | NR |
| 100% | S+ | S | D | D | D | D- |

### EXAMPLE 2: Polyurethane Active Agent Swellable Polymer Powder and Conventional Oil-Based Stain Composition

| % load | acetone | ethyl acetate | MEK | MAK | n. butyl acetate | butyl cellosolve |
|---|---|---|---|---|---|---|
| 5% | S | S | S | S | S | D- |
| 20% | D | D | D | S+ | D | S |
| 40% | D | D+ | D | D | D | S |
| 80% | NR | NR | NR | NR | NR | NR |
| 100% | D | D | D | D | D- | S |

### EXAMPLE 3: Poly-Epoxy Hybrid Active Agent Swellable Polymer Powder and Conventional Oil-Based Stain Composition

| % load | acetone | ethyl acetate | MEK | MAK | n. butyl acetate | butyl cellosolve |
|---|---|---|---|---|---|---|
| 5% | S+ | NR | S | S | NR | NR |
| 20% | NR | NR | NR | NR | NR | NR |
| 40% | D | D | D | S | D | S |
| 80% | NR | NR | NR | NR | NR | NR |
| 100% | D | D | D | D | D | S+ |

### EXAMPLE 4: Polyester Active Agent Swellable Polymer Powder and Conventional Water-based Stain Composition

A red oak veneer substrate was used. The base carrier composition selected for Example 4 was a conventional water-based stain composition. Sky White II (9910-9897) polyester powder coat, available from TCI Powder Coatings (available from Ellaville, Georgia), was used as the active agent swellable polymer powder. Propylene glycol methyl ether acetate (PM acetate) was used as the active agent. The finishing composition was prepared at a load of 40%. For reference, 100% load identifies equal volumes of base carrier composition and active agent swellable polymer powder (*e.g.,* 50:50 volume ratio of base carrier composition and active agent swellable polymer powder).

The finishing composition was applied to the substrate by spraying, allowed 30 seconds to penetrate the substrate, and then wiped free of excess. The finishing composition was then cured at 120dF for 10 minutes and allowed 30 additional minutes to cool. The active agent was then applied to the substrate.

After application of the active agent, a significant difference in the definition and brilliance of the active agent swellable polymer powder was observed, and the swelled active agent swellable polymer powder became more prominently featured.

The above text sets forth a broad description of numerous different aspects of the present disclosure. This disclosure is exemplary only and does not describe every possible aspect since describing every possible aspect would be impractical, if not impossible. It will be generally understood that any feature, characteristic, component, composition, product, step, or methodology described herein can be deleted, combined with or substituted for, in whole or in part, any other feature, characteristic, component, composition, product, step, or methodology described herein.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; X employs both A and B. In addition, the articles "a" and "an" as used in this application and the appended claims should generally be construed to mean "one or more" unless specified otherwise or clear from the context to be directed to singular form.

As used herein, the phrase "at least one of" is intended to be inclusive of a variety of possible alternatives. For example, "at least one of A, B, and C" means any possible combination of A alone, B alone, C alone, A and B together, B and C together, A and C together, or A, B, and C together. It is intended that the same is true of the phrase "at least one of A, B, or C."

The values disclosed herein are not to be understood as being strictly limiting to the exact numerical values recited. Instead, unless otherwise specified, the value is intended to mean both the value and a functionally equivalent range surrounding the value. Ranges can be expressed herein as from "about" a value to "about" another value. Ranges may also be expressed as "substantially" a value. The term "about," or "substantially," or other related terms of approximation, are understood to encompass variations of +/- 10% or less, preferably +/- 5% or less, more preferably +/- 1% or less, and still more preferably +/- 0.1% or less from the specified value, insofar such variations are appropriate to perform in the disclosed application.

## Claims

1. A finishing composition comprising:
a base carrier composition; and
a cerusing element comprising an active agent swellable polymer powder.

2. The finishing composition of claim 1, wherein the cerusing element is dispersed within the base carrier composition; or wherein the base carrier composition comprises an oil-based stain composition, a water-based stain composition, or a solvent-based stain composition.

3. The finishing composition of claim 1, wherein the active agent swellable polymer powder comprises an organic polymer powder.

4. The finishing composition of claim 3, wherein the organic polymer powder comprises at least one of polyester polymer powder, polyurethane polymer powder, polyester-epoxy polymer powder, polyester-acrylic polymer powder, epoxy polymer powder, glycidyl-functional acrylic polymer powder, acrylic polymer powder, and polypropylene polymer powder.

5. A finishing process comprising steps (A) and (B) applied in sequential order:
(A) applying a finishing composition to a substrate, the finishing composition comprising a base carrier composition and a cerusing element, wherein the cerusing element comprises an active agent swellable polymer powder; and
(B) applying an active agent to the substrate.

6. The process of claim 5, further comprising step (C), wherein step (C) comprises at least one of the following:
(1) wiping the finishing composition of step (A) from the substrate prior to conducting step (B); and
(2) allowing the base carrier composition and the cerusing element of step (A) to dry prior to conducting step (B).

7. The process of claim 6, wherein the base carrier composition comprises an oil-based stain composition, a water-based stain composition, or a solvent-based stain composition.

8. The process of claim 5, wherein the active agent swellable polymer powder comprises an organic polymer powder; preferably wherein the organic polymer powder comprises at least one of polyester polymer powder, polyurethane polymer powder, polyester-epoxy polymer powder, polyester-acrylic polymer powder, epoxy polymer powder, glycidyl-functional acrylic polymer powder, acrylic polymer powder, and polypropylene polymer powder.

9. The process of claim 6, wherein the active agent comprises a compound having at least one functional group selected from the group consisting of ketones, esters, alcohols, ethers, alkyl halides, and siloxanes; or
wherein the active agent comprises at least one of acetone, butanol, butyl cellosolve (2-butoxyethanol), ethanol, ethyl acetate, methyl n-amyl ketone (2-heptanone), butanone, methanol, methyl acetate, n-butyl acetate, propylene glycol methyl ether acetate, toluene, perchloroethylene, tricholortrifluoroethane, 1,1,1-trichloroethane, parachlorobenzotrifluoride, cyclohexasiloxane, and cyclopentasiloxane.

10. The process of claim 5, wherein the active agent is part of a topcoat, sealer coat, tie coat, washcoat, clear coat, or activator; or wherein the substrate comprises a porous or textured substrate.

11. The process of claim 5, wherein the substrate comprises wood, stone, concrete, plastic, resin, vinyl, a composite material, metal, or a prefinished surface.

12. A kit for finishing a substrate comprising:
a base carrier composition; and
a cerusing element comprising an active agent swellable polymer powder.

13. An article comprising a substrate and a finishing composition disposed on the substrate, wherein the finishing composition comprises a base carrier composition and a cerusing element comprising an active agent swellable polymer powder.

14. The article of claim 13, wherein the article further comprises an active agent disposed on the substrate, preferably wherein the active agent is part of a topcoat, sealer coat, tie coat, washcoat, clear coat, or activator.

15. The article of claim 13, wherein the substrate comprises wood, stone, concrete, plastic, resin, vinyl, a composite material, metal, or a prefinished surface.
